# EUROPEAN PATENT APPLICATION

(11) **EP 2 605 107 A1**
(43) Date of publication of application: **19.06.2013**
(21) Application number: 11193152.3
(22) Date of filing: 13.12.2011
(51) Int. Cl.: G06F 3/00, G06F 3/01, G06F 1/16

(54) **Methods and devices for identifying a gesture**

(71) Applicant: Research In Motion Limited, Waterloo, ON N2L 3W8 (CA)
(72) Inventor: Cripps, Glen, Waterloo, Ontario N2L 3W8 (CA)
(74) Representative: Patel, Binesh

(57) **Abstract**

Methods and mobile electronic devices for identifying a gesture on a mobile electronic device are provided. In one embodiment, the method includes: obtaining camera data of a subject from a camera on the mobile electronic device; obtaining device movement data from a sensor on the mobile electronic device, the device movement data representing physical movement of the mobile electronic device; and based on the camera data and the device movement data, interpreting movement of the subject as a predetermined input command associated with a predetermined gesture when movement of the subject captured by the camera corresponds to the predetermined gesture.

## Description

### TECHNICAL FIELD

The present disclosure relates to mobile electronic devices and, more particularly, to methods and mobile electronic devices for identifying a predetermined gesture on a mobile electronic device.

### BACKGROUND

Mobile electronic devices such as smartphones and tablet computers are generally equipped with one or more input mechanisms which allow a user to provide input to such devices. Such input mechanisms may include, for example, a keyboard and one or more navigational input mechanisms such as a mouse, track pad, or trackball. Recently, touchscreen displays which provide both input and output functionality have become common in electronic devices. Such touchscreen displays may provide navigational input and, in some devices, alphanumeric input through the use of virtual keyboards.

In order to provide for maximum mobility, mobile electronic devices are generally relatively small. In order to permit mobile electronic devices to be provided in a desirable form factor and to minimize the size of such devices, input mechanisms which rely on user contact may have small contact areas and, in at least some situations, may be difficult to actuate. For example, physical keys on the electronic device may be small. Similarly, touchscreen displays may be difficult to operate since they generally provide only visual demarcation of input areas rather than physical demarcation of such areas.

### BRIEF DESCRIPTION OF THE DRAWINGS

Reference will now be made, by way of example, to the accompanying drawings which show an embodiment of the present application, and in which:

FIG. 1 is a block diagram illustrating an electronic device in accordance with example embodiments of the present disclosure;

FIG. 2 is a front view of a smartphone in accordance with example embodiments of the present disclosure;

FIG. 3 is a front view of a tablet computer is accordance with example embodiments of the present disclosure;

FIG. 4 is a flowchart of a method for receiving a gesture-based input in accordance with example embodiments of the present disclosure;

FIG. 5 is a flowchart of a method for receiving a gesture-based input in accordance with example embodiments of the present disclosure;

FIG. 6 is a flowchart of a method for receiving a gesture-based input in accordance with example embodiments of the present disclosure; and

FIG. 7 is a flowchart of a method for confirming a predicted word in accordance with example embodiments of the present disclosure.

Like reference numerals are used in the drawings to denote like elements and features.

### DETAILED DESCRIPTION OF EXAMPLE EMBODIMENTS

In one aspect, the present disclosure describes a method performed on a mobile electronic device. The method includes: obtaining camera data of a subject from a camera on the mobile electronic device; obtaining device movement data from a sensor on the mobile electronic device, the device movement data representing physical movement of the mobile electronic device; and based on the camera data and the device movement data, interpreting movement of the subject as a predetermined input command associated with a predetermined gesture when movement of the subject captured by the camera corresponds to the predetermined gesture.

In another aspect, the present disclosure describes a mobile electronic device. The mobile device includes a camera configured to obtain camera data of a subject and a movement sensor configured to obtain device movement data. The device movement data identifies physical movement of the mobile electronic device. The mobile electronic device also includes a processor coupled to the camera and the movement sensor. The processor is configured to: based on the camera data and the device movement data, interpret movement of the subject as a predetermined input command associated with a predetermined gesture when movement of the subject captured by the camera corresponds to the predetermined gesture.

In another aspect, the present disclosure describes a computer readable storage medium comprising computer executable instructions for: based on camera data of a subject obtained from a camera on a mobile electronic device and device movement data which identifies physical movement of the mobile electronic device, determine if movement of the subject captured by the camera corresponds to a predetermined gesture; and if the movement corresponds to the predetermined gesture, interpreting the movement as a predetermined input command associated with the predetermined gesture.

Other example embodiments of the present disclosure will be apparent to those of ordinary skill in the art from a review of the following detailed description in conjunction with the drawings.

As will be described in greater detail below, at least some example embodiments of the present disclosure describe mobile electronic devices (such as smartphones, tablet computers), methods, systems, and computer-readable mediums which allow a camera associated with such mobile electronic devices to be used to provide user input. That is, gesture recognition may be performed based on camera data received from a camera to determine whether the camera data corresponds to a predetermined gesture such as a facial gesture.

Since mobile electronic devices are portable and are generally designed to be easily moved between different physical locations, it may be more difficult to recognize gestures on such electronic devices than on non-portable devices. More particularly, when a subject is captured by the camera and it appears to the electronic device that the subject is moving in a pattern associated with a predetermined gesture, it may be possible that the perceived movement of the subject is not the result of actual movement of the subject but rather is the result of movement of the electronic device itself or is the result of both movement of the electronic device and movement of the subject.

Accordingly, in at least some example embodiments of the present disclosure, a movement sensor is provided on the mobile electronic device. The movement sensor senses physical movement of the mobile electronic device and produces device movement data which identifies physical movement of the mobile electronic device. In at least some embodiments, the device movement data may be used in conjunction with the camera data to determine whether movement of a subject captured by the camera corresponds to a predetermined gesture. That is, the device movement data and the camera data may be used to determine whether the actual movement of the subject corresponds to a predetermined gesture.

### Example Electronic Device

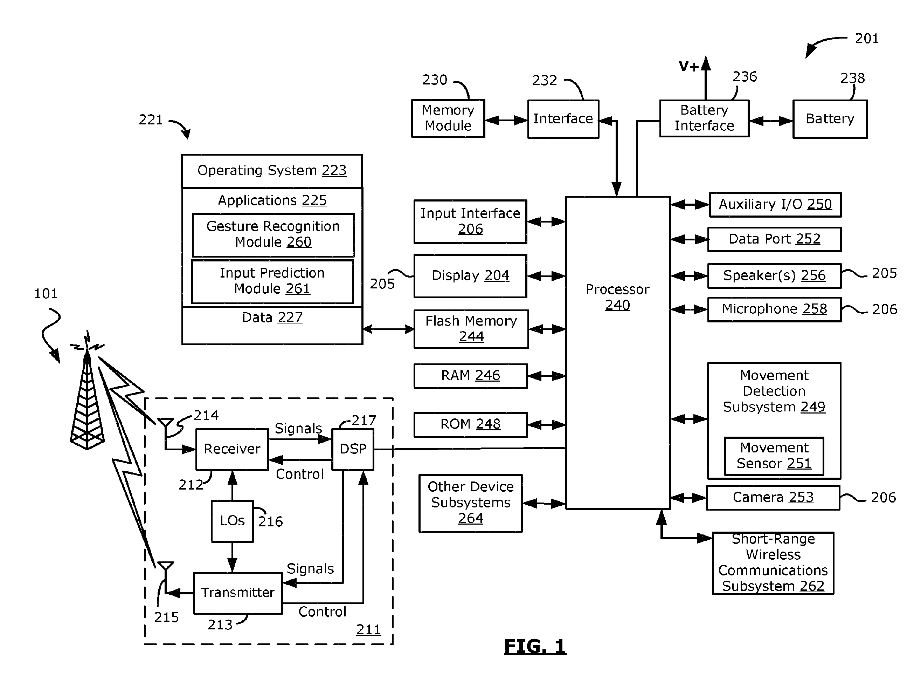

Reference will now be made to FIG. 1 which illustrates an example mobile electronic device 201 in which example embodiments described in the present disclosure can be applied. In the illustrated example embodiment, the mobile electronic device 201 is a communication device and, more particularly, is a mobile communication device having data and voice communication capabilities, and the capability to communicate with other computer systems; for example, via the Internet. The mobile electronic device 201 may, however, take other forms.

Depending on the functionality provided by the mobile electronic device 201, in various example embodiments the mobile electronic device 201 may be a multiple-mode communication device configured for both data and voice communication, a mobile telephone such as a smartphone, a wearable computer such as a watch, a tablet computer such as a slate computer, a personal digital assistant (PDA), or a computer system. The mobile electronic device 201 may take other forms apart from those specifically listed above. The mobile electronic device 201 may also be referred to as a mobile communications device, a communication device, a mobile device, an electronic device and, in some cases, as a device.

The mobile electronic device 201 includes a controller including one or more processor 240 (such as a microprocessor) which controls the overall operation of the mobile electronic device 201. The processor 240 interacts with device subsystems such as a wireless communication subsystem 211 for exchanging radio frequency signals with a wireless network 101 to perform communication functions. The processor 240 may be communicably coupled with additional device subsystems including one or more output interfaces 205 (such as a display 204 and/or a speaker 256), one or more input interfaces 206 (such as a camera 253, microphone 258, keyboard (not shown), control buttons (not shown), a navigational input device (not shown), a touch-sensitive overlay (not shown) associated with a touchscreen display 204 and/or other input interfaces 206), a movement detection subsystem 249, memory (such as flash memory 244, random access memory (RAM) 246, read only memory (ROM) 248, etc.), auxiliary input/output (I/O) subsystems 250, a data port 252 (which may be a serial data port, such as a Universal Serial Bus (USB) data port), a short-range communication subsystem 262 and other device subsystems generally designated as 264. Some of the subsystems shown in FIG. 1 perform communication-related functions, whereas other subsystems may provide "resident" or on-device functions.

In at least some example embodiments, the mobile electronic device 201 may include a touchscreen display which acts as both an input interface 206 (i.e. touch-sensitive overlay) and an output interface 205 (i.e. display). The touchscreen display may be constructed using a touch-sensitive input surface which is connected to an electronic controller and which overlays the display 204. The touch-sensitive overlay and the electronic controller provide a touch-sensitive input interface 206 and the processor 240 interacts with the touch-sensitive overlay via the electronic controller.

The mobile electronic device 201 may include a communication subsystem 211 which allows the mobile electronic device 201 to communicate over a wireless network 101. The communication subsystem 211 includes a receiver 212, a transmitter 213, and associated components, such as one or more antenna elements 214 and 215, local oscillators (LOs) 216, and a processing module such as a digital signal processor (DSP) 217. The antenna elements 214 and 215 may be embedded or internal to the mobile electronic device 201 and a single antenna may be shared by both receiver and transmitter. The particular design of the wireless communication subsystem 211 depends on the wireless network 101 in which mobile electronic device 201 is intended to operate.

In at least some example embodiments, the mobile electronic device 201 may communicate with any one of a plurality of fixed transceiver base stations of the wireless network 101 within its geographic coverage area. The mobile electronic device 201 may send and receive communication signals over the wireless network 101 after the required network registration or activation procedures have been completed. Signals received by the antenna 214 through the wireless network 101 are input to the receiver 212, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 217. In a similar manner, signals to be transmitted are processed, including modulation and encoding, for example, by the DSP 217. These DSP-processed signals are input to the transmitter 213 for digital-to-analog (D/A) conversion, frequency up conversion, filtering, amplification, and transmission to the wireless network 101 via the antenna 215. The DSP 217 not only processes communication signals, but may also provide for receiver and transmitter control. For example, the gains applied to communication signals in the receiver 212 and the transmitter 213 may be adaptively controlled through automatic gain control algorithms implemented in the DSP 217.

In some example embodiments, the auxiliary input/output (I/O) subsystems 250 may include an external communication link or interface; for example, an Ethernet connection. The mobile electronic device 201 may include other wireless communication interfaces for communicating with other types of wireless networks; for example, a wireless network such as an orthogonal frequency division multiplexed (OFDM) network. The auxiliary I/O subsystems 250 may include a vibrator for providing vibratory notifications in response to various events on the mobile electronic device 201 such as receipt of an electronic communication or incoming phone call, or for other purposes such as haptic feedback (touch feedback).

In some example embodiments, the mobile electronic device 201 also includes a removable memory module 230 (typically including flash memory, such as a removable memory card) and a memory interface 232. Network access may be associated with a subscriber or user of the mobile electronic device 201 via the memory module 230, which may be a Subscriber Identity Module (SIM) card for use in a GSM network or other type of memory card for use in the relevant wireless network type. The memory module 230 is inserted in or connected to the memory card interface 232 of the mobile electronic device 201 in order to operate in conjunction with the wireless network 101.

The data port 252 may be used for synchronization with a user's host computer system (not shown). The data port 252 enables a user to set preferences through an external device or software application and extends the capabilities of the mobile electronic device 201 by providing for information or software downloads to the mobile electronic device 201 other than through the wireless network 101. The alternate download path may for example, be used to load an encryption key onto the mobile electronic device 201 through a direct, reliable and trusted connection to thereby provide secure device communication.

In at least some example embodiments, the mobile electronic device 201 also includes a movement detection subsystem 249 including at least one movement sensor 251. The movement sensor 251 may be connected to the processor 240 and be controlled by one or a combination of a monitoring circuit and operating software. The movement sensor 251 detects or can be used to detect physical movement of the mobile electronic device 201. That is, the movement sensor 251 may produce device movement data when the mobile electronic device 201 is physically moved. The device movement data, therefore, identifies physical movement of the mobile electronic device 201.

The movement sensor 251 may, in at least some embodiments, be an accelerometer, such as a three-axis accelerometer. An accelerometer is a sensor which converts acceleration from motion (e.g. movement of the mobile electronic device 201 or a portion thereof) and gravity into an electrical signal (producing a corresponding change in output). The acceleration may be detected by one or more sensing elements of the accelerometer. Accelerometers may be available in one, two or three axis configurations. Higher order axis configurations are also possible. Accelerometers may produce digital or analog output signals depending on the type of accelerometer.

The mobile electronic device 201 may, in at least some example embodiments, include other movement sensors 251 instead of or in addition to an accelerometer. For example, in various example embodiments, the movement detection subsystem 249 may include any one or more of the following movement sensors 251: a gravity sensor, a gyroscope, a tilt sensor, an electronic compass. Other types of movement sensors which produce an output in response to movement of the mobile electronic device 201 may also be used.

The mobile electronic device 201 may also include one or more cameras 253. The camera 253 is capable of capturing camera data including images in the form of still photographs or motion video. In at least some embodiments, the camera 253 is adapted to capture an image through a lens onto a light sensitive image sensor, such as a charge coupled device (CCD) sensor array or a complementary metal oxide semiconductor (CMOS) sensor array. Light incident on the light sensitive image sensor is converted to the camera data. The camera lens may be a fixed focus lens or a variable focus lens with or without zoom features. In at least some example embodiments, the camera 253 may be controlled by camera software associated with the mobile electronic device 201. For example, the camera software may control a camera lens aperture and/or a shutter speed. The control of such features may, in at least some embodiments, be automatically performed by the camera software based on output received from a light exposure meter.

In at least some example embodiments, the mobile electronic device 201 includes a front facing camera 253. A front facing camera is a camera which is generally located on a front face of the mobile electronic device 201. The front face is typically the face on which a display 204 is mounted. That is, when a front facing camera 253 is provided on the mobile electronic device 201, the display 204 is configured to display content which may be viewed from a side of the mobile electronic device 201 where the camera 253 is directed. Since a user's face is generally located in a position which allows them to view the display 204, a front facing camera 253 may be used to provide facial-gesture based input to the mobile electronic device 201. That is, as will be explained in greater detail below, the front facing camera 253 may be used to capture movement of a subject (such as a user's head). The mobile electronic device 201 may then determine whether the movement of the subject corresponds to a predetermined gesture (such as a predetermined facial gesture).

The front facing camera 253 may be located on the front surface of the mobile electronic device; for example, the camera 253 may be located above or below the display 204. In at least some example embodiments, the camera 253 may be provided in a central location relative to the display 204 to facilitate image acquisition of a face.

In some example embodiments, the mobile electronic device 201 is provided with a service routing application programming interface (API) which provides an application with the ability to route traffic through a serial data (i.e., USB) or Bluetooth^{®} (Bluetooth^{®} is a registered trademark of Bluetooth SIG, Inc.) connection to a host computer system using standard connectivity protocols. When a user connects their mobile electronic device 201 to the host computer system via a USB cable or Bluetooth^{®} connection, traffic that was destined for the wireless network 101 is automatically routed to the mobile electronic device 201 using the USB cable or Bluetooth^{®} connection. Similarly, any traffic destined for the wireless network 101 is automatically sent over the USB cable or Bluetooth^{®} connection to the host computer system for processing.

The mobile electronic device 201 also includes a battery 238 as a power source, which is typically one or more rechargeable batteries that may be charged for example, through charging circuitry coupled to a battery interface 236 such as the data port 252. The battery 238 provides electrical power to at least some of the electrical circuitry in the mobile electronic device 201, and the battery interface 236 provides a mechanical and electrical connection for the battery 238. The battery interface 236 is coupled to a regulator (not shown) which provides power V+ to the circuitry of the mobile electronic device 201.

The mobile electronic device 201 stores data 227 in an erasable persistent memory, which in one example embodiment is the flash memory 244. In various example embodiments, the data 227 includes service data including information required by the mobile electronic device 201 to establish and maintain communication with the wireless network 101. The data 227 may also include user application data such as email messages, address book and contact information, calendar and schedule information, notepad documents, image files, and other commonly stored user information stored on the mobile electronic device 201 by its user, and other data. The data 227 stored in the persistent memory (e.g. flash memory 244) of the mobile electronic device 201 may be organized, at least partially, into one or more databases or data stores. The databases or data stores may contain data items of the same data type or associated with the same application. For example, email messages, contact records, and task items may be stored in individual databases within the device memory.

The mobile electronic device 201 may, in some example embodiments, be a mobile communication device which may provide two principal modes of communication: a data communication mode and a voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email messaging application and output to the display 204. A user of the mobile electronic device 201 may also compose data items, such as email messages; for example, using the input devices in conjunction with the display 204. These composed items may be transmitted through the communication subsystem 211 over the wireless network 101.

In the voice communication mode, the mobile electronic device 201 provides telephony functions and operates as a typical cellular phone. The overall operation is similar, except that the received signals would be output to the speaker 256 and signals for transmission would be generated by a transducer such as the microphone 258. The telephony functions are provided by a combination of software/firmware (i.e., a voice communication module) and hardware (i.e., the microphone 258, the speaker 256 and input interfaces 206). Alternative voice or audio I/O subsystems, such as a voice message recording subsystem, may also be implemented on the mobile electronic device 201. Although voice or audio signal output is typically accomplished primarily through the speaker 256, the display screen 204 may also be used to provide an indication of the identity of a calling party, duration of a voice call, or other voice call related information.

The processor 240 operates under stored program control and executes software modules 221 stored in memory such as persistent memory; for example, in the flash memory 244. As illustrated in FIG. 1, the software modules 221 include operating system software 223 and other software applications 225.

In at least some example embodiments, the mobile electronic device 201 may be configured to predict a word which is being typed. That is, in at least some embodiments, the mobile electronic device 201 may be configured to receive a portion of a word and to predict the complete word based on the received portion of the word. In at least some example embodiments, one or more of the software modules 221 or applications 225 may be configured to predict a complete word based on a received portion of the word. Such a software module 221 or application 225 may be referred to as an input prediction module 261.

The input prediction module 261 is configured to predict a complete word or phrase from input which is only representative of a portion of the word or phrase. The input prediction module 261 may consult a dictionary to predict a complete word or phrase from incomplete input. In some example embodiments, the dictionary may be populated based on words or phrases which the user has previously input into the mobile electronic device 201. That is, the input prediction module 261 may predict words based on previously used words. For example, in at least some embodiments, the input prediction module 261 attempts to identify words or phrases which include the input portion of the word or phrase. In at least some situations, the input prediction module 261 may identify two or more candidate words or phrases which each include the input portion of the word or phrase. In at least some embodiments, the input prediction module 261 may be configured to attempt to determine which of the candidate words or phrases is more likely to be the desired word or phrase. For example, in at least some embodiments, the input prediction module 261 may include word or phrase usage information specifying probabilities associated with the use of each word or phrase. The word or phrase usage information may specify a frequency of usage of each of the words or phrases. Based on the word or phrase usage information, the input prediction module 261 determines which candidate word or phrase is more likely to be the desired word or phrase which is being input.

In at least some embodiments, the mobile electronic device 201 may have a reduced keyboard in which more than one character is associated with each of at least a portion of a plurality of keys. This results in certain keys being ambiguous since more than one character is represented by or associated with the key, even though only one of those characters is typically intended by the user when activating the key. In at least some such embodiments, the input predictive module 261 (or another software application 225 or module 221) may be configured to predict which of the characters associated with a key was desired. For example, the input prediction module 261 may be configured to recognize character sequences that are common to a particular language, such as, in the case of the English language, words ending in "ing." The input prediction module 261 may also learn the typing style of the user and make note of frequently used words to increase the accuracy of predictions.

In at least some embodiments, after the input prediction module 261 has predicted a word or phrase (or predicted a portion of a word or phrase in the case of some embodiments of the input predictive module 261 for reduced keyboard mobile electronic devices 201), it may display a request to confirm that the predicted word, phrase, or portion thereof is the desired word, phrase or portion. For example, the input prediction module 261 may display the predicted word or phrase and may allow a user to confirm that the input prediction module 261 has correctly predicted the word or phrase. As will be described in greater detail below, in at least some example embodiments, the user may confirm that the displayed word or phrase is correct by performing one or more predetermined gestures such as one or more predetermined facial gestures.

Accordingly, in at least some embodiments, the mobile electronic device 201 is configured to determine whether a user has performed one or more predetermined gestures and, if a user has performed the predetermined gesture, to interpret the gesture as an input command which is associated with that gesture.

In at least some example embodiments, one or more of the software modules 221 or applications 225 may be configured to recognize such gestures. A software module 221 or application 225 which is configured to recognize such gestures may be referred to as a gesture recognition module 260.

In at least some embodiments, the gesture recognition module 260 is configured to obtain camera data from the camera 253 and to obtain device movement data from the movement sensor 251 and to determine, based on the camera data and the device movement data, whether a user has performed a predetermined gesture. More particularly, the gesture recognition module 260 may be configured to determine if the movement of a subject captured by the camera 253 corresponds to a predetermined gesture. That is, the device movement data and the camera data may be used to determine whether the actual movement of the subject corresponds to a predetermined gesture. The gesture recognition module 260 may be configured to use the device movement data to ensure that movement of the mobile electronic device 201 is not inadvertently interpreted as movement of a subject captured by the camera 253.

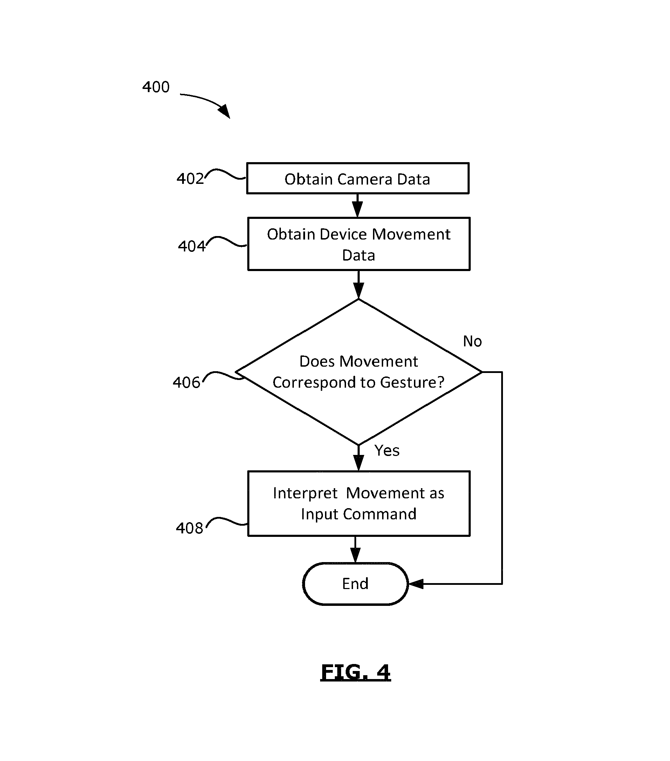

The gesture recognition module 260 will be discussed in greater detail below with reference to FIGs. 4 to 7.

In the example embodiment of FIG. 1, the input prediction module 261 and gesture recognition module 260 are illustrated as stand-alone applications 225. However, in other example embodiments, one or both of these modules could be implemented as part of the operating system 223 or another application 225.

The software applications 225 on the mobile electronic device 201 may also include a range of additional applications, including for example, a notepad application, Internet browser application, voice communication (i.e. telephony) application, mapping application, or a media player application, or any combination thereof. Each of the software applications 225 may include layout information defining the placement of particular fields and graphic elements (e.g. text fields, input fields, icons, etc.) in the user interface (e.g. the display 204) according to the application.

The software modules 221 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely one example, and those skilled in the art will appreciate that a different assignment of functions to types of memory could also be used.

A predetermined set of applications that control basic device operations, including data and possibly voice communication applications will normally be installed on the mobile electronic device 201 during or after manufacture. Additional applications and/or upgrades to the operating system 223 or software applications 225 may also be loaded onto the mobile electronic device 201 through the wireless network 101, the auxiliary I/O subsystem 250, the data port 252, the short-range communication subsystem 262, or other suitable subsystem 264. The downloaded programs or code modules may be permanently installed; for example, written into the program memory (i.e. the flash memory 244), or written into and executed from the RAM 246 for execution by the processor 240 at runtime.

### Example Smartphone Mobile Electronic Device

As discussed above, the mobile electronic device 201 may take a variety of forms. For example, in at least some example embodiments, the mobile electronic device may be a smartphone.

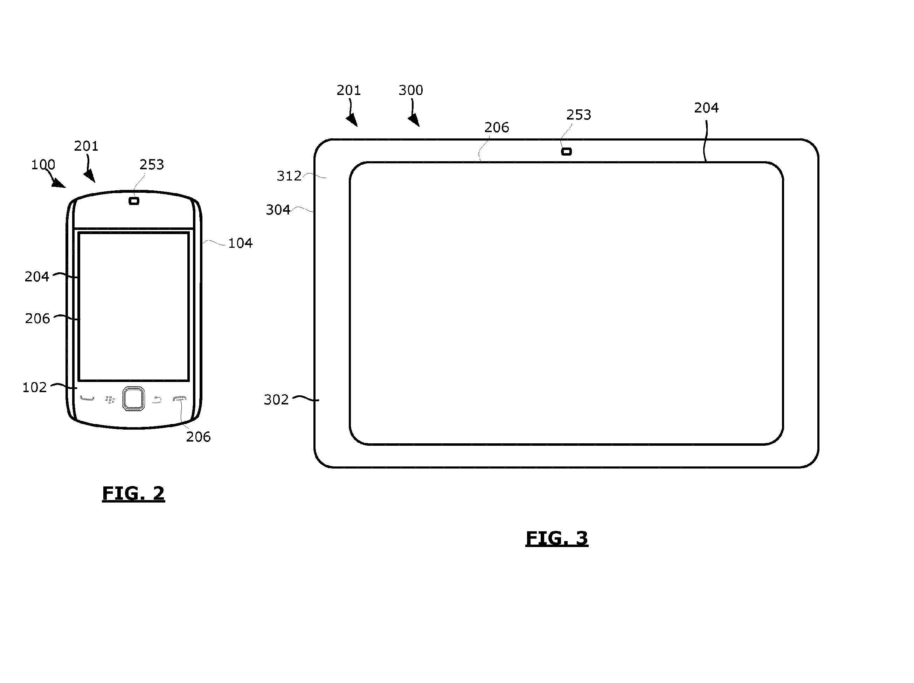

Referring now to FIG. 2, a front view of an example mobile electronic device 201 which is a smartphone 100 is illustrated. The smartphone 100 is a mobile phone which offers more advanced computing capability than a basic non-smartphone cellular phone. For example, the smartphone 100 may have the ability to run third party applications which are stored on the smartphone.

The smartphone 100 may include the components discussed above with reference to FIG. 1 or a subset of those components. The smartphone 100 includes a housing 104 which houses at least some of the components discussed above with reference to FIG. 1.

In the example embodiment illustrated, the smartphone includes a display 204, which may be a touchscreen display which acts as an input interface 206. The display 204 is disposed within the smartphone 100 so that it is viewable at a front side 102 of the smartphone 100. That is, a viewable side of the display 204 is disposed on the front side 102 of the smartphone. In the example embodiment illustrated, the display 204 is framed by the housing 104.

The example smartphone 100 also includes other input interfaces 206 such as one or more buttons, keys or navigational input mechanisms. In the example illustrated, at least some of these additional input interfaces 206 are disposed for actuation at a front side 102 of the smartphone.

The example smartphone 100 also includes a front facing camera 253 which may be located vertically above the display 204 when the smartphone 100 is held in a portrait orientation where its height is longer than its width. The front facing camera 253 is located so that it may capture images of objects which are located in front of and/or surrounding the front side of the smartphone 100.

### Example Tablet Mobile electronic device

In at least some example embodiments, the mobile electronic device 201 may be a tablet computer. Referring now to FIG. 3, a front view of an example mobile electronic device 201 which is a tablet computer 300 is illustrated.

The tablet computer 300 of FIG. 3 may include many of the same features and components of the smartphone 100 of FIG. 2. However, the tablet computer 300 of FIG. 3 is generally larger than the smartphone 100 of FIG. 2. The tablet computer 300 may include the components discussed above with reference to FIG. 1 or a subset of those components. The tablet computer 300 includes a housing 304 which houses at least some of the components discussed above with reference to FIG. 1.

The tablet computer 300 includes a display 204, which may be a touchscreen display which acts as an input interface 206. The display 204 is disposed within the tablet computer 300 so that it is viewable at a front side 302 of the tablet computer 300. That is, a viewable side of the display 204 is disposed on the front side 302 of the tablet computer 300. In the example embodiment illustrated, the display 204 is framed by the housing 304.

A frame 312 surrounds the display 204. The frame 312 is a portion of the housing 304 which provides a border around the display 204. In at least some example embodiments, the frame 312 is an active frame 312. That is, the frame has a touch sensitive overlay which allows the mobile electronic device 201 to detect a touch applied to the frame 312 thus allowing the frame 312 to act as an input interface 206 (FIG. 1).

The example tablet computer 300 also includes a front facing camera 253 which may be located vertically above the display 204 when the tablet computer 300 is held in a landscape orientation (i.e. the orientation of FIG. 3). The front facing camera 253 is located so that it may capture images of objects which are located in front of and/or surrounding the front side of the tablet computer 300.

### Gesture Based Input

Reference will now be made to FIG. 4 which illustrates a flowchart of a method 400 for receiving a gesture-based input. A mobile electronic device 201 may be configured to perform the method 400 of FIG. 4.

In at least some example embodiments, the processor 240 (FIG. 1) of the mobile electronic device 201 (FIG. 1) is configured to perform the method 400. More particularly, in at least some example embodiments, one or more application 225 (FIG. 1) or module stored in memory of the device 201 (FIG. 1) may be configured to perform the method 400 of FIG. 4. One or more applications 225 (FIG. 1) may contain computer readable instructions which cause the processor 240 (FIG. 1) of the mobile electronic device 201 (FIG. 1) to perform the method 400. In at least some example embodiments, the gesture recognition module 260 may be configured to perform the method 400 of FIG. 4. More particularly, the gesture recognition module 260 may include computer readable instructions which, when executed, cause the processor 240 (FIG. 1) to perform the method 400 of FIG. 4.

The method 400 of FIG. 4 may, in at least some example embodiments, be provided by other software applications or modules apart from those specifically discussed above; for example, the operating system 223 (FIG. 1). Similarly, any portion of the method 400 of FIG. 4 may be performed by or rely on other applications 225 (FIG. 1) or modules which may interface with gesture recognition module 260 (FIG. 1).

At 402, the mobile electronic device 201 obtains camera data from one or more cameras 253 associated with the mobile electronic device 201. In at least some embodiments, the camera data is received from a front facing camera 253. The camera data includes images in the form of still photographs or motion video. The camera data may include one or more subject which has been captured in the images. The subject is, in at least some embodiments, a user of the mobile electronic device 201. In at least some embodiments, the subject may be a user's head. In at least some embodiments, the camera data may include perceived movement of a subject captured in the camera data. Perceived movement occurs when, based on the camera data alone, the subject appears to have moved over time. That is, perceived movement occurs where the subject occupies different portions of an image captured by the camera 253 at different points in time. For example, a subject may occupy a first portion of a first frame or photograph and may occupy a different portion of a second frame or photograph.

When a subject (such as a user's head) appears to have moved over time based on camera data, the mobile electronic device 201 may perceive movement of the subject. That is, based only on the camera data, it may appear that the subject has moved. However, since the electronic device is mobile, at least a portion of the perceived movement may not be caused by actual movement of the subject. Instead, at least a portion of the perceived movement may be caused by movement of the electronic device 201. More specifically, perceived movement by a camera 253 may be caused by either actual movement of a subject, actual movement of the mobile electronic device itself, or both.

In order to ensure that perceived movements are not confused with actual movement of a subject, in at least some embodiments, at 404, device movement data is obtained. The device movement data may be obtained from a movement sensor 251 (FIG. 1) on the mobile electronic device 201. Example movement sensors 251 are discussed above with reference to FIG. 1. The device movement data identifies physical movement of the mobile electronic device 201.

At 406, the mobile electronic device 201 may use the camera data and the device movement data to determine whether movement of a subject captured by the camera 253 corresponds to a predetermined gesture. That is, at 406, the mobile electronic device 201 uses the camera data and the device movement data to ensure that a perceived movement of a subject which appears to correspond to a predetermined gesture is not caused by movement of the mobile electronic device 201. That is, at 406, the mobile electronic device 201 ensures that only actual movement of the subject can be interpreted as a gesture. The mobile electronic device 201 may determine whether perceived movement of a subject (i.e. movement which appears to have occurred based on the camera data) captured in the camera data is caused by movement of the mobile electronic device and, if so, it may determine that the camera data does not does not represent the predetermined gesture.

A predetermined gesture may be defined by a predetermined pattern of movement of a subject. A pattern of movement of a subject may be defined by one or more movement vectors which specify one or more directions of movement for the subject.

In at least some embodiments, the predetermined gesture may be facial gesture. A facial gesture is a gesture executed with a user's head and/or facial muscles. For example, in at least some embodiments, a predetermined gesture may be a smile. In some embodiments, a predetermined gesture may be a frown.

In at least some embodiments, the subject may be the head of a user. In such embodiments, a predetermined gesture may represent a pattern of movement of a head. For example, in at least some embodiments, the mobile electronic device 201 may be configured to recognize a nod of a head. A nod may be represented by a pattern of movement which consists of a head being lowered and subsequently raised. In at least some example embodiments, a nod may be represented by a pattern of movement which consists of a head being raised and subsequently lowered.

In at least some embodiments, the mobile electronic device 201 may be configured to recognize a predetermined gesture which is a shaking of the head. A shaking of the head may be represented by a pattern of movement which consists of a head being rotated about a neck from one side (e.g. left) to another side (e.g. right).

In at least some embodiments, the mobile electronic device 201 may be configured to recognize a predetermined gesture which is a head tilt. A head tilt may be either a left head tilt, which occurs when the head is tilted to the left side, or a right head tilt, which occurs when the head is tilted to the right side. Accordingly, in at least some embodiments, the mobile electronic device 201 may be configured to recognize a right head tilt, a left head tilt, or both.

In at least some embodiments, the mobile electronic device 201 may be configured to recognize predetermined gestures which include a look-up gesture, a look-down gesture, or both. A look-up gesture occurs when a user tilts their head back so that their face is directed upwardly. A look-down gesture occurs when a user tilts their head down so that their face is directed downwardly.

In at least some embodiments, in order to determine whether movement of a subject corresponds to a predetermined gesture, the mobile electronic device 201 may identify eyes of a subject (i.e. a user) in captured camera data. For example, in order to identify a predetermined gesture which is defined by movement of a subject's head, eyes of a subject may be identified in camera data. The eyes may be used, for analysis purposes, in order to represent the head. That is, in order to determine whether the head was moved in a pattern associated with a predetermined gesture, the mobile electronic device 201 may determine whether the eyes were moved in the pattern associated with the predetermined gesture.

Accordingly, in at least some embodiments, at 406, the mobile electronic device 201 may identify a subject (e.g. by identifying eyes) and track the pattern of movement of the subject. The mobile electronic device 201 may determine whether the pattern of movement of the subject corresponds to the pattern of movement associated with a predetermined gesture. While making this determination, the mobile electronic device 201 may use the device movement data to ensure that a perceived movement of a subject which appears to correspond to a predetermined gesture is not caused by movement of the mobile electronic device 201. That is, the mobile electronic device 201 may ensure that movement is only determined to be a gesture if the actual movement of a subject corresponds to a pattern of movement associated with the gesture.

Next, at 408, if the movement of the subject corresponds to the predetermined gesture then the movement is interpreted as a predetermined input command associated with the predetermined gesture. That is, if the actual movement of the subject is determined to correspond to the pattern of movement associated with the predetermined gesture, then the mobile electronic device 201 may interpret the movement as an input command.

The input command may, in at least some embodiments be context dependent. That is, movement which corresponds to a given predetermined gesture may be interpreted as a first input command if such movement occurs when the mobile electronic device 201 is in a first operating mode and it may be interpreted as a second input command, which is different from the first input command, if such movement occurs when the mobile electronic device 201 is in a second operating mode.

The mobile electronic device 201 may be configured to recognize movement corresponding to a plurality of predetermined gestures. In at least some embodiments, one or more of the predetermined gestures may be associated with different input commands than another one or more of the predetermined gestures. That is, different gestures may represent different input commands.

In at least some embodiments, in one operating mode, a nod of a head may be associated with a command to confirm information which is displayed on a display 204 (FIG. 1) of the mobile electronic device 201. That is, when the mobile electronic device 201 determines that a user has nodded their head, the mobile electronic device 201 may interpret the head nod to be a command to confirm information which was displayed on the display 204. For example, a user may be prompted with a dialog box which prompts them to confirm acceptance of displayed information before proceeding. By way of example, the mobile electronic device may prompt a user to confirm information such as terms and conditions (e.g. "Do you agree to the terms and conditions?"), file or system operations or settings (e.g. "Would you like to delete the file?", "Are you sure you would like to shut down?"), or other information. In at least some embodiments, a nod of the head may be effectively interpreted as a "yes" or "okay". That is, a nod may be interpreted as assent, agreement or acceptance.

In at least some embodiments, in one operating mode, a shake of a head may be associated with a command to not approve, accept or assent to displayed input. The shake of the head may, for example, be a gesture which may be identified when the mobile electronic device 201 is in an operating mode in which "no" is a valid input. In response to observing a shake of a head, the mobile electronic device 201 may determine that the user does not accept the displayed information. By way of example, a shake of the head may be used to respond to one of the example prompts listed above (e.g. "Do you agree to the terms and conditions?", "Would you like to delete the file?", "Are you sure you would like to shut down?"), or similar such prompts.

In at least some embodiments, in one operating mode, one or more facial gestures, such as a smile, frown and/or wink may each be associated with an emoticon. In at least some such embodiments, in response to observing movement of a face which corresponds to a facial gesture associated with an emoticon, the mobile electronic device 201 may insert the emoticon into a field, such as a field in a chat window.

In at least some embodiments, one or more predetermined gestures may, in at least one operating mode, be associated with a request to scroll a document. In at least some embodiments, different gestures may be associated with commands to scroll in different directions. For example, in at least some embodiments, in one operating mode the mobile electronic device 201 may be configured to interpret a left head tilt as a command to scroll left in a document. In response to receiving such a command, the mobile electronic device 201 may cause scrolling to occur in a left-wise direction. Similarly, in at least some embodiments, in one operating mode the mobile electronic device 201 may be configured to interpret a right head tilt as a command to scroll right in a document. In response to receiving such a command, the mobile electronic device 201 may cause scrolling to occur in a right-wise direction. Similarly, in at least some embodiments, in one operating mode the mobile electronic device 201 may be configured to interpret movement corresponding to a look-up gesture as a command to scroll upwardly in a document. In response to receiving such a command, the mobile electronic device 201 may cause scrolling to occur in an upward direction. Similarly, in at least some embodiments, in one operating mode the mobile electronic device 201 may be configured to interpret movement corresponding to a look-down gesture as a command to scroll downwardly in a document. In response to receiving such a command, the mobile electronic device 201 may cause scrolling to occur in a downward direction.

In at least some embodiments, the degree or speed of scrolling may depend on the degree to which the head is moved. For example, if the mobile electronic device 201 observes a larger tilt of the head, the degree or speed of the scrolling may be larger or faster than when the mobile electronic device 201 observes a relatively smaller tilt of the head.

Accordingly, in at least some embodiments, after determining that movement of a subject corresponds with a predetermined gesture, the mobile electronic device 201 may perform a predetermined function which is associated with that gesture.

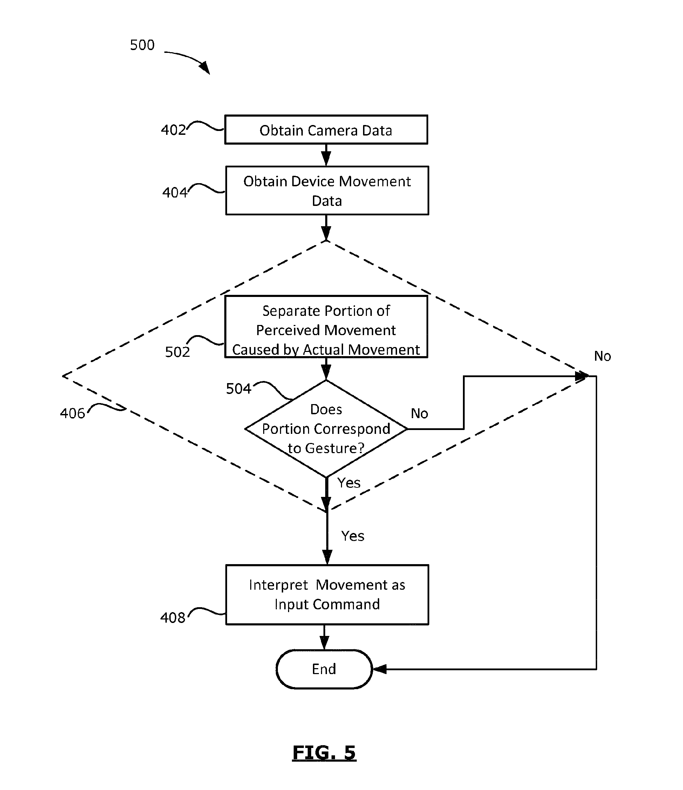

Reference will now be made to FIG. 5 which illustrates a flowchart of a method 500 for receiving a gesture-based input. A mobile electronic device 201 may be configured to perform the method 500 of FIG. 5.

In at least some example embodiments, the processor 240 (FIG. 1) of the mobile electronic device 201 (FIG. 1) is configured to perform the method 500. More particularly, in at least some example embodiments, one or more application 225 (FIG. 1) or module stored in memory of the device 201 (FIG. 1) may be configured to perform the method 500 of FIG. 5. One or more applications 225 (FIG. 1) may contain computer readable instructions which cause the processor 240 (FIG. 1) of the mobile electronic device 201 (FIG. 1) to perform the method 500. In at least some example embodiments, the gesture recognition module 260 may be configured to perform the method 500 of FIG. 5. More particularly, the gesture recognition module 260 may include computer readable instructions which, when executed, cause the processor 240 (FIG. 1) to perform the method 500 of FIG. 5.

The method 500 of FIG. 5 may, in at least some example embodiments, be provided by other software applications or modules apart from those specifically discussed above; for example, the operating system 223 (FIG. 1). Similarly, any portion of the method 500 of FIG. 5 may be performed by or rely on other applications 225 (FIG. 1) or modules which may interface with gesture recognition module 260 (FIG. 1).

The method 500 includes many features and operations which are discussed above with reference to FIG. 4. More particularly, the method 500 includes, at 402, obtaining camera data from a camera associated with the mobile electronic device 201 and, at 404, obtaining device movement data from a movement sensor 251 associated with the mobile electronic device 201. 402 and 404 are discussed in greater detail above with reference to FIG. 4.

The method 500 also includes, at 406, determining whether movement of a subject captured by the camera 253 corresponds to a predetermined gesture based on the camera data and the device movement data. 406 may include operations or features discussed above with reference to FIG. 4.

In the example embodiment of FIG. 5, in order to determine whether movement of the subject captured by the camera 253 corresponds to a predetermined gesture, the mobile electronic device 201 may, at 502, separate the portion of a perceived movement of a subject which is caused by actual movement of the subject from the portion of the perceived movement of the subject which is caused by movement of the mobile electronic device. As noted previously, perceived movement occurs where, based on the camera data alone, the subject appears to have moved over time. For example, perceived movement occurs when the subject occupies different portions of an image captured by the camera 253 at different points in time. For example, a subject may occupy a first portion of a first frame or photograph and may occupy a different portion of a later second frame or photograph.

When a subject (such as a user's head) appears to have moved over time based on camera data, the mobile electronic device 201 may perceive movement of the subject. That is, based only on the camera data, it may appear that the subject has moved. However, since the electronic device 201 is mobile, at least a portion of the perceived movement may not be caused by actual movement of the subject. Instead, at least a portion of the perceived movement may be caused by movement of the electronic device 201. More specifically, perceived movement by a camera 253 may be caused by either actual movement of a subject, actual movement of the mobile electronic device itself, or both.

In the method 500 of FIG. 5, calculations or operations are performed based on the camera data and the device movement data to separate the portion of a perceived movement of a subject which is caused by actual movement of the subject from the portion of the perceived movement of the subject which is caused by movement of the mobile electronic device. That is, a representation of the movement of the subject is obtained which negates the effect of the movement of the mobile electronic device 201.

Next, at 504, the mobile electronic device 201 determines if the portion of the perceived movement of a subject which is caused by actual movement of the subject corresponds to a predetermined gesture. Accordingly, at 504, when the mobile electronic device 201 determines if movement corresponding to a predetermined gesture has been observed, it bases the determination on the actual movement of the subject.

Next, at 408, if the portion of the perceived movement of a subject which is caused by actual movement of the subject corresponds to a predetermined gesture, then the mobile electronic device 201 may interpret the movement as an input command which is associated with that predetermined gesture. 408 is discussed in greater detail above with reference to FIG. 4.

Depending on the abilities of the processor 240, the type of movement sensor 251 provided on the mobile electronic device 201, the nature of the movement, and other factors, in at least some embodiments, it may be difficult or impossible to separate the portion of a perceived movement of a subject which is caused by actual movement of the subject from the portion of the perceived movement of the subject which is caused by movement of the mobile electronic device. In at least some example embodiments, when determining whether movement of a subject captured by the camera 253 corresponds to a predetermined gesture based on the camera data and the device movement data, the mobile electronic device 201 may use the device movement data to ensure that the mobile electronic device 201 was not moved during the time when a movement corresponding to a predetermined gesture was observed.

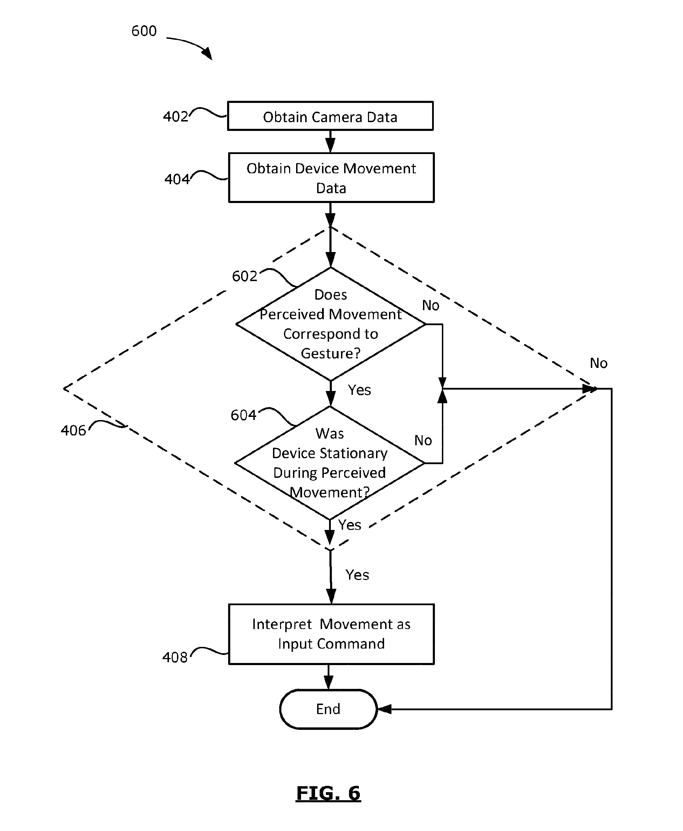

Referring now to FIG. 6, a flowchart of one such example embodiment is illustrated. FIG. 6 illustrates a method 600 for receiving a gesture-based input. A mobile electronic device 201 may be configured to perform the method 600 of FIG. 6.

In at least some example embodiments, the processor 240 (FIG. 1) of the mobile electronic device 201 (FIG. 1) is configured to perform the method 600. More particularly, in at least some example embodiments, one or more application 225 (FIG. 1) or module stored in memory of the device 201 (FIG. 1) may be configured to perform the method 600 of FIG. 6. One or more applications 225 (FIG. 1) may contain computer readable instructions which cause the processor 240 (FIG. 1) of the mobile electronic device 201 (FIG. 1) to perform the method 600. In at least some example embodiments, the gesture recognition module 260 may be configured to perform the method 600 of FIG. 6. More particularly, the gesture recognition module 260 may include computer readable instructions which, when executed, cause the processor 240 (FIG. 1) to perform the method 600 of FIG. 6.

The method 600 of FIG. 6 may, in at least some example embodiments, be provided by other software applications or modules apart from those specifically discussed above; for example, the operating system 223 (FIG. 1). Similarly, any portion of the method 600 of FIG. 6 may be performed by or rely on other applications 225 (FIG. 1) or modules which may interface with gesture recognition module 260 (FIG. 1).

The method 600 includes many features and operations which are discussed above with reference to FIG. 4. More particularly, the method 600 includes, at 402, obtaining camera data from a camera associated with the mobile electronic device 201 and, at 404, obtaining device movement data from a movement sensor 251 associated with the mobile electronic device 201. 402 and 404 are discussed in greater detail above with reference to FIG. 4.

The method 600 also includes, at 406, determining whether movement of a subject captured by the camera 253 corresponds to a predetermined gesture based on the camera data and the device movement data. 406 may include operations or features discussed above with reference to FIG. 4.

In the example embodiment of FIG. 6, in order to determine whether movement of the subject captured by the camera 253 corresponds to a predetermined gesture, the mobile electronic device 201 may, at 602, determine if the captured camera data includes perceived movement which corresponds to a predetermined gesture. This determination may be made based on the camera data without regard to the device movement data.

At 604, the mobile electronic device 201 may determine if the mobile electronic device was stationary during that perceived movement. This determination may be made based on the device movement data.

If the captured camera data includes perceived movement which corresponds to the predetermined gesture and if the mobile electronic device 201 was stationary during that perceived movement, then the mobile electronic device 201 may determine that the movement of the subject corresponds to the predetermined gesture. That is, the method 600 may proceed to 408, where the movement is interpreted as an input command. 408 is discussed in greater detail above with reference to FIG. 4.

If, however, the mobile electronic device was not stationary during the perceived movement or the perceived movement does correspond to the predetermined gesture, then the mobile electronic device 201 may determine that the movement of the subject does not represent the predetermined gesture. That is, the movement is not interpreted as an input command (i.e. 408 is not performed).

### Gesture Based Input for Word Prediction

As noted in the discussion of FIG. 1 above, in at least some example embodiments, the mobile electronic device 201 may be equipped with predictive capabilities, such as the ability to predict a complete word based on a received portion of a word. For example, in at least some example embodiments, an input prediction module 261 (FIG. 1) may be configured to provide prediction capabilities. In at least some example embodiments, the gesture-based techniques described herein may be used together with the prediction capabilities to facilitate the input of text.

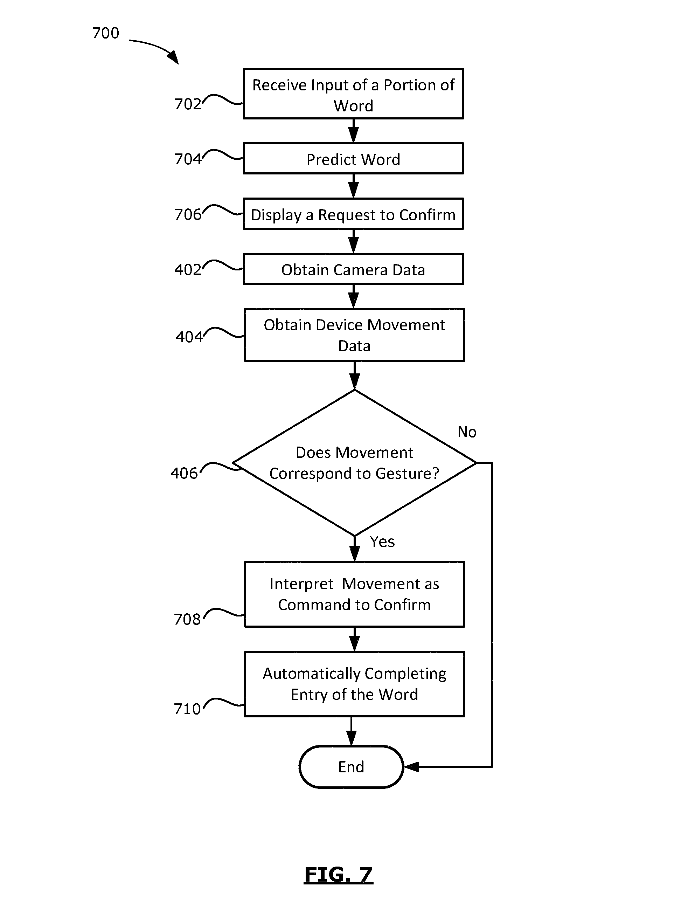

Referring now to FIG. 7, a flowchart of one such example embodiment is illustrated. FIG. 7 illustrates a method 700 for receiving a gesture-based input. A mobile electronic device 201 may be configured to perform the method 700 of FIG. 7.

In at least some example embodiments, the processor 240 (FIG. 1) of the mobile electronic device 201 (FIG. 1) is configured to perform the method 700. More particularly, in at least some example embodiments, one or more application 225 (FIG. 1) or module stored in memory of the device 201 (FIG. 1) may be configured to perform the method 700 of FIG. 7. One or more applications 225 (FIG. 1) may contain computer readable instructions which cause the processor 240 (FIG. 1) of the mobile electronic device 201 (FIG. 1) to perform the method 700. In at least some example embodiments, the gesture recognition module 260 may be configured to perform the method 700 of FIG. 7, or a portion thereof. In at least some example embodiments, an input prediction module 261 (FIG. 1) may be configured to perform at least a portion of the method 700 of FIG. 7. More particularly, the gesture recognition module 260 and/or the input prediction module 261 may include computer readable instructions which, when executed, cause the processor 240 (FIG. 1) to perform the method 700 of FIG. 7.

The method 700 of FIG. 7 may, in at least some example embodiments, be provided by other software applications or modules apart from those specifically discussed above; for example, the operating system 223 (FIG. 1). Similarly, any portion of the method 700 of FIG. 7 may be performed by or rely on other applications 225 (FIG. 1) or modules which may interface with gesture recognition module 260 (FIG. 1) and/or the input prediction module 261.

The method 700 includes many features and operations which are discussed above with reference to FIG. 4.

In at least some embodiments, at 702, the mobile electronic device 201 may receive input of a portion of a word. The input may be received, for example, from an input interface 206 associated with the mobile electronic device 201, such as a keyboard or touchscreen display.

Next, at 704, the mobile electronic device 201 may attempt to predict a complete word based on the portion of the word input at 702. The prediction may be performed, for example, by using the received input (i.e. the incomplete word) to consult a dictionary which lists a plurality of terms.

In some example embodiments, the dictionary may be pre-populated based on words or phrases which the user has previously input into the mobile electronic device 201. That is, at 704, word may be predicted based on previously used words. In n at least some embodiments, the input prediction module 261 attempts to identify words or phrases which include the portion of the word received at 702. In at least some situations, two or more candidate words which each include the input portion of the word may be identified at 704. In at least some embodiments, the mobile electronic device 201 may be configured to attempt to determine which of the candidate words is more likely to be the desired word. For example, in at least some embodiments, the mobile electronic device 201 may include word usage information specifying probabilities associated with the use of each word. The word usage information may specify a frequency of usage of each of the words. Based on the word usage information, the mobile electronic device 201 determines which candidate word is more likely to be the desired word or phrase which is being input. Other techniques may be employed instead of or in addition to the predictive techniques described herein in order to predict a word at 704.

Next, at 706, a request to confirm information may be displayed on a display 204 (FIG. 1) of the mobile electronic device 201. More particularly, the request may be a prompt for a user to confirm that the predicted word is correct. That is, the request may be a request for the user to indicate whether the predicted word is the desired word.

The method 700 may include, at 402, obtaining camera data from a camera associated with the mobile electronic device 201 and, at 404, obtaining device movement data from a movement sensor 251 associated with the mobile electronic device 201. 402 and 404 are discussed in greater detail above with reference to FIG. 4.

The method may also include, at 406, based on the camera data and the device movement data, determining if movement of a subject captured by the camera corresponds to a predetermined gesture. 406 is discussed in greater detail above with reference to FIGs. 4 to 6. In at least some embodiments, the predetermined gesture is a nod of a head.

If the mobile electronic device determines that the movement of the subject captured by the camera corresponds to the predetermined gesture then, at 708, the mobile electronic device 201 interprets the movement as an input command. More specifically, at 708, the mobile electronic device 201 interprets the movement as a command to confirm the displayed information. That is, the mobile electronic device 201 interprets the movement as a command to confirm that the predicted word is correct.

If the mobile electronic device determines that the movement of the subject captured by the camera corresponds to the predetermined gesture then, at 710, the mobile electronic device 201 may automatically complete entry of the word. For example, the mobile electronic device 201 may automatically add the word to a text field.

While the present disclosure is primarily described in terms of methods, a person of ordinary skill in the art will understand that the present disclosure is also directed to various apparatus such as a handheld electronic device including components for performing at least some of the aspects and features of the described methods, be it by way of hardware components, software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present disclosure.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray^{™} Disc, and a solid state storage device (e.g., NAND flash or synchronous dynamic RAM (SDRAM)).

Example embodiments of the present disclosure are not limited to any particular operating system, system architecture, mobile device architecture, server architecture, or computer programming language.

The various example embodiments presented above are merely examples and are in no way meant to limit the scope of this disclosure. Variations of the innovations described herein will be apparent to persons of ordinary skill in the art, such variations being within the intended scope of the present application. In particular, features from one or more of the above-described example embodiments may be selected to create alternative embodiments included of a sub-combination of features which may not be explicitly described above. In addition, features from one or more of the above-described example embodiments may be selected and combined to create alternative embodiments included of a combination of features which may not be explicitly described above. Features suitable for such combinations and subcombinations would be readily apparent to persons skilled in the art upon review of the present application as a whole. The subject matter described herein and in the recited claims intends to cover and embrace all suitable changes in technology.

## Claims

1. A method performed on a mobile electronic device (201), the method comprising:
obtaining camera data of a subject from a camera (253) on the mobile electronic device (201);
obtaining device movement data from a sensor (251) on the mobile electronic device (201), the device movement data representing physical movement of the mobile electronic device (201); and
based on the camera data and the device movement data, interpreting movement of the subject as a predetermined input command associated with a predetermined gesture when movement of the subject captured by the camera (253) corresponds to the predetermined gesture.

2. The method of claim 1, wherein interpreting the movement of the subject as a predetermined input command associated with a predetermined gesture when movement of the subject captured by the camera (253) corresponds to the predetermined gesture comprises:
determining whether perceived movement of the subject captured in the camera data is caused by movement of the mobile electronic device (201)and if so, determining that the camera data does not correspond to the predetermined gesture.

3. The method of any one of claims 1 or 2, wherein interpreting the movement of the subject as a predetermined input command associated with a predetermined gesture when movement of the subject captured by the camera (253) corresponds to the predetermined gesture comprises:
separating the portion of a perceived movement of the subject which is caused by actual movement of the subject from the portion of the perceived movement of the subject which is caused by movement of the mobile electronic device (201); and
determining if the portion of the perceived movement of a subject which is caused by actual movement of the subject corresponds to the predetermined gesture.

4. The method of any one of claims 1 to 3, wherein interpreting the movement of the subject as a predetermined input command associated with a predetermined gesture when movement of the subject captured by the camera (253) corresponds to the predetermined gesture comprises:
determining if the camera data includes a perceived movement which corresponds to the predetermined gesture and determining if the mobile electronic device (201) was stationary during that perceived movement; and
if the camera data includes perceived movement which corresponds to the predetermined gesture and if the mobile electronic device (201) was stationary during that perceived movement, determining that the movement of the subject corresponds to the predetermined gesture.

5. The method of claim 4, wherein interpreting the movement of the subject as a predetermined input command associated with a predetermined gesture when movement of the subject captured by the camera (253) corresponds to the predetermined gesture comprises:
if the mobile electronic device (201) was not stationary during the perceived movement or the perceived movement does not correspond to the predetermined gesture, determining that the movement of the subject does not represent the predetermined gesture.

6. The method of any one of claims 1 to 5, wherein the sensor (251) is an accelerometer.

7. The method of any one of claims 1 to 6, wherein the predetermined gesture is a predetermined facial gesture.

8. The method of any one of claims 1 to 7, wherein the predetermined gesture is a nod of a head.

9. The method of any one of claims 1 to 8, wherein interpreting the movement of the subject as a predetermined input command associated with a predetermined gesture when movement of the subject captured by the camera (253) corresponds to the predetermined gesture comprises:
identifying eyes of the subject; and
determining if a movement of the eyes of the subject corresponds to the predetermined gesture.

10. The method of any one of claims 1 to 9, further comprising, prior to interpreting the movement of the subject as a predetermined input command:
displaying a request to confirm information on a display of the mobile electronic device (201),
and wherein the input command is a command to confirm the information.

11. The method of claim 10, further comprising:
prior to displaying the request to confirm information:
receiving input of a portion of a word through an input interface associated with the mobile electronic device (201); and
predicting the word based on the portion of the word; and
in response to receiving the command to confirm the information, automatically completing entry of the word based on the predicted word.

12. The method of any one of claims 1 to 11, wherein the input command is a command to scroll a document.

13. A mobile electronic device (201) comprising:
a camera (253) configured to obtain camera data of a subject;
a movement sensor (251) configured to obtain device movement data, the device movement data identifying physical movement of the mobile electronic device (201);
a processor coupled to the camera (253) and the movement sensor (251), the processor being configured to perform the method of any one of claims 1 to 12.

14. A computer readable storage medium comprising computer executable instructions for performing the method of any one of claims 1 to 12.
